# DEMANDE DE BREVET EUROPEEN

(11) **EP 0 954 166 A1**
(43) Date de publication de la demande: **03.11.1999**
(21) Numéro de dépôt: 99401035.3
(22) Date de dépôt: 28.04.1999
(51) Int. Cl.: H04N 1/405

(54) **Procédés de conversion et de reproduction d'une image, organe de transfert d'encre et support comportant une telle image**

(30) Priorité: 30.04.1998 FR 9805501
(71) Demandeur: L'OREAL, 75008 Paris (FR)
(72) Inventeur: Choulet, Luc, 71000 Macon (FR)
(74) Mandataire: Leszczynski, André

(57) **Abrégé**

L'invention est relative à un procédé de conversion pour générer une image en demi-ton à partir d'une image digitalisée comportant un ensemble de pixels ayant chacun une valeur de nuance, à chaque pixel de l'image digitalisée étant associée une cellule de base de l'image en demi-ton, subdivisée en autant de zones élémentaires qu'il y a de valeurs de nuances non nulles.

Il comporte les étapes consistant à :
- analyser l'image digitalisée par fenêtres d'analyse constituées chacune par le regroupement d'un nombre prédéterminé de pixels, et
- au moins dans le cas où la valeur de nuance de l'un au moins des pixels d'une fenêtre d'analyse tombe dans un premier ensemble de valeurs de nuance prédéterminé, effectuer une conversion de la valeur de nuance de chacun des pixels de la fenêtre d'analyse en un rapport choisi surface encrée/non encrée dans chacune des cellules de base correspondant respectivement à ces pixels, ces cellules de base formant ensemble une super-cellule, ladite conversion s'effectuant en respectant une répartition des zones élémentaires et un ordre de remplissage prédéterminés en fonction de la valeur de nuance à convertir, cette répartition et cet ordre de remplissage tenant compte de la technique d'impression utilisée pour reproduire l'image en demi-ton sur un support, l'image obtenue présentant deux zones ayant des linéatures différentes sans transition brutale entre elles.

## Description

La présente invention concerne la reproduction d'une image digitalisée, notamment mais non exclusivement au moyen d'une technique d'impression mettant en oeuvre un organe de transfert d'encre sur lequel cette image a été convertie en une image en demi-ton.

Dans une telle image, encore appelée image tramée ou simili, les nuances des pixels de l'image digitalisée sont converties en rapports choisis surfaces encrées/non encrées.

Dans le procédé d'impression utilisant une trame dite à modulation d'amplitude, la conversion des valeurs de nuance des pixels de l'image digitalisée en rapports choisis surfaces encrées/non encrées consiste à moduler la grosseur de chaque point de trame en fonction de la valeur de nuance à reproduire.

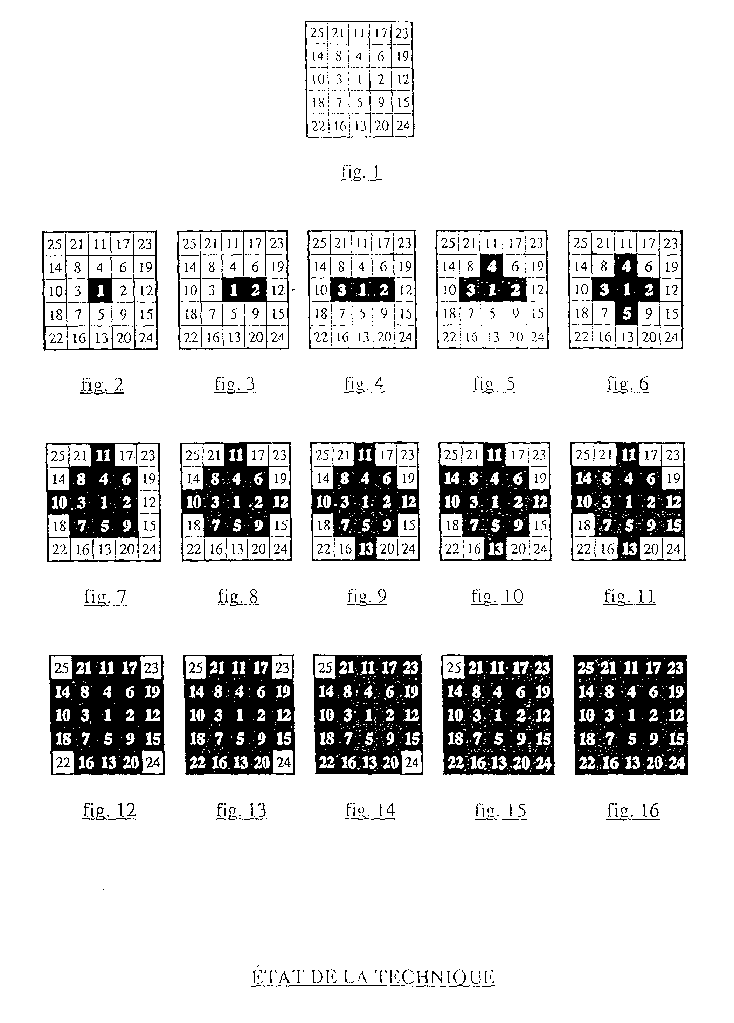

On en a illustré sur les figures 1 à 16 le principe, ayant supposé dans un souci de clarté de l'exposé que la nuance de chaque pixel de l'image digitalisée est codée sur 26 valeurs seulement. Dans cette hypothèse, la surface affectée sur l'image en demi-ton à la reproduction de chaque pixel de l'image digitalisée, encore appelée cellule de base, est subdivisée en 25 zones élémentaires identiques, comme illustré sur la figure 1, et il en est de même sur l'organe de transfert d'encre utilisé pour imprimer ce support et sur le support ainsi imprimé.

En fonction de la nuance à reproduire, le point de trame remplit un nombre plus ou moins grand de zones élémentaires, ce remplissage s'effectuant à partir du centre dans le cas de la trame à modulation d'amplitude, comme illustré sur les figures 2 à 16.

On a attribué sur ces figures à chaque zone élémentaire un numéro correspondant à la valeur de nuance à partir de laquelle elle est couverte d'encre.

Les figures 2 à 6 représentent respectivement les zones élémentaires qui sont encrées pour traduire les valeurs de nuance allant de 1 à 5, les figures 7 à 11 représentent respectivement celles qui sont encrées pour traduire les valeurs de nuance allant de 11 à 15 et les figures 12 à 16 représentent respectivement celles qui sont encrées pour traduire les valeurs de nuance allant de 21 à 25.

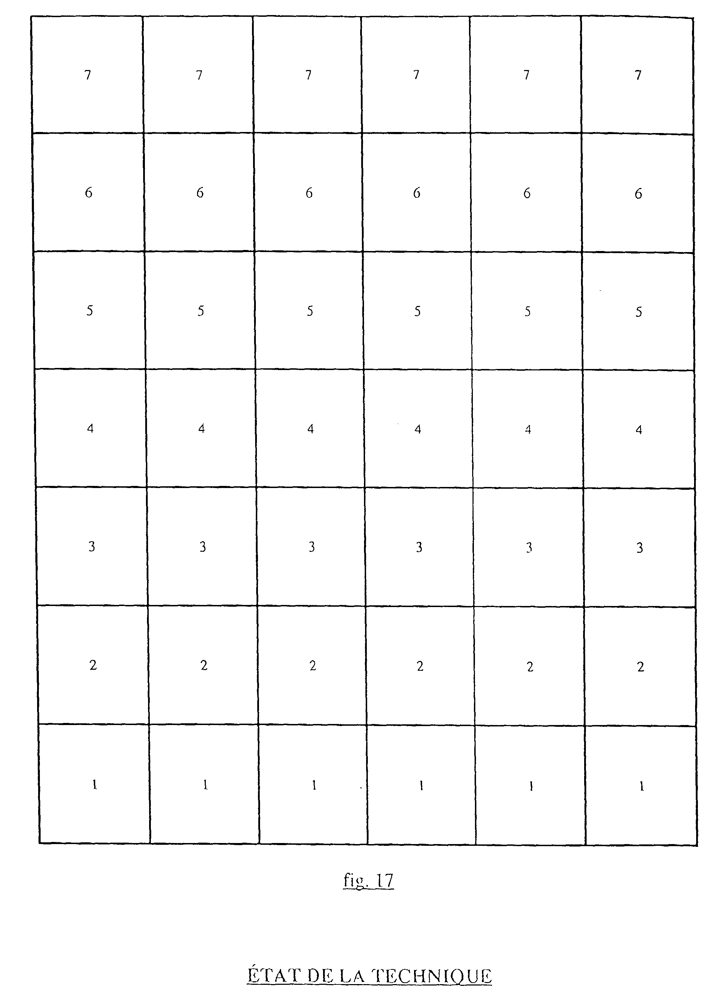

On a indiqué sur la figure 17 les valeurs de nuance des pixels d'une image digitalisée à reproduire, correspondant à un dégradé des hautes lumières en bas, c'est-à-dire les valeurs de nuance les plus faibles, vers les basses lumières en haut, c'est-à-dire des valeurs de nuance plus élevées.

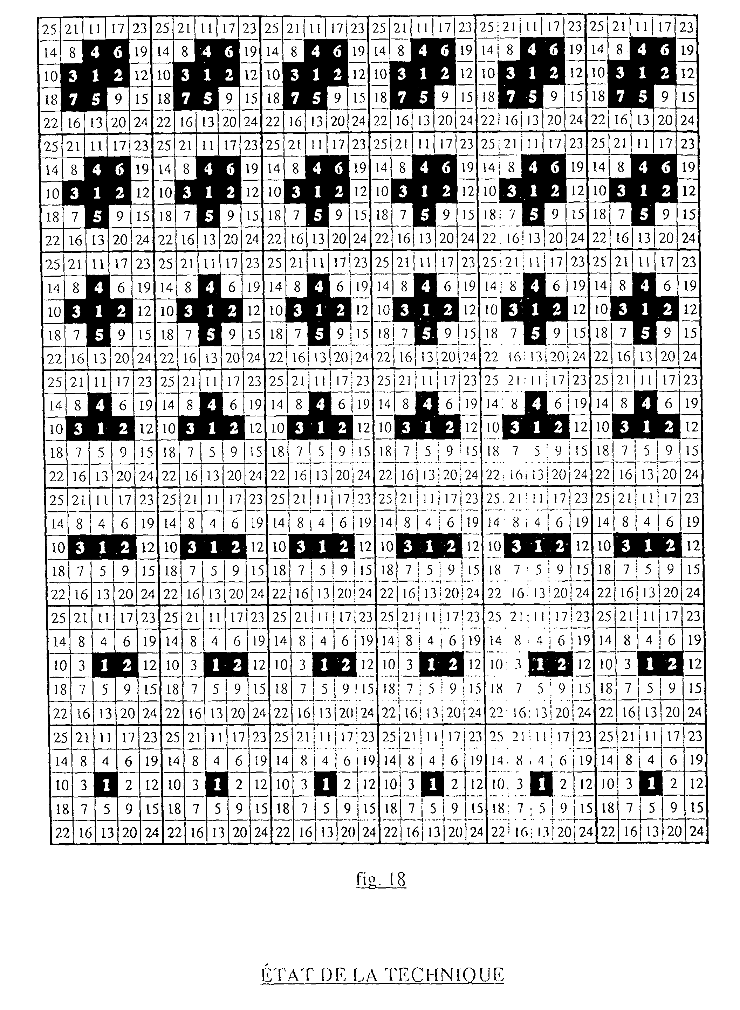

A supposer que la technique d'impression utilisée pour imprimer l'image représentée sur la figure 17 ne souffre d'aucune limitation physique, la répartition des surfaces encrées aussi bien sur l'organe de transfert d'encre que sur le support imprimé sera celle illustrée sur la figure 18.

Toutefois, dans la pratique, il s'avère que les techniques d'impression connues ne permettent pas de restituer fidèlement les nuances dans les hautes et/ou basses lumières, notamment à cause de limitations physiques.

En particulier, si la technique d'impression utilisée est la flexographie, c'est-à-dire qu'elle met en oeuvre un organe de transfert d'encre qui est gravé de manière à présenter des reliefs aux endroits où l'encre doit être transférée sur le support à imprimer, on constate que les reliefs isolés et de petite taille visant à reproduire les nuances dans les hautes lumières ne peuvent pas être réalisés ou ne le peuvent être d'une manière durable car trop fragiles.

Le même problème se pose pour l'offset sec.

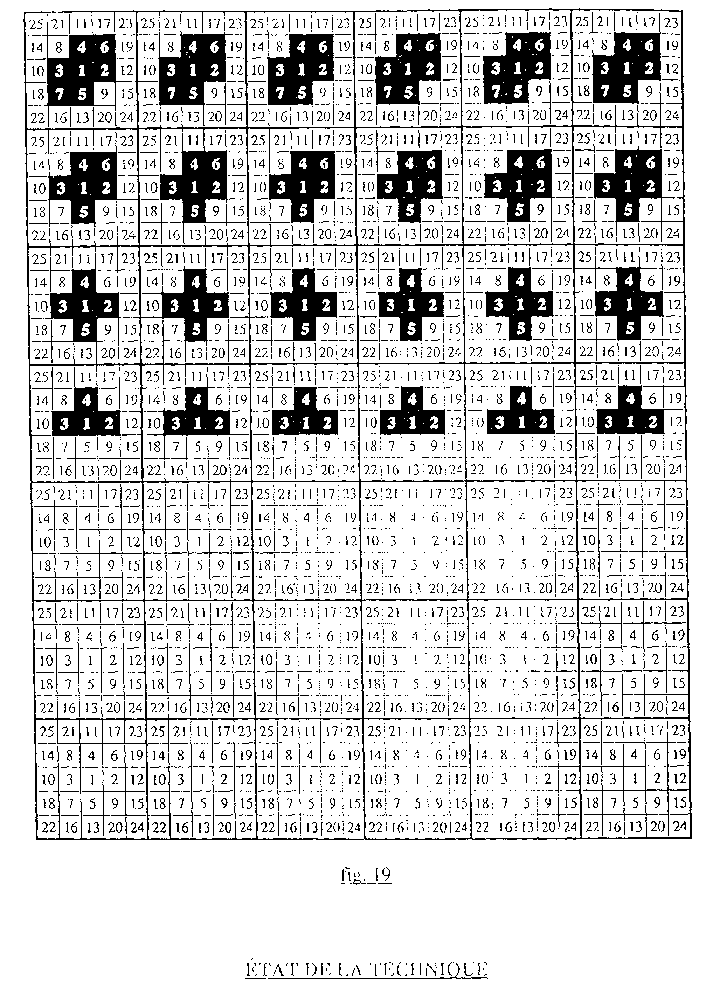

A titre d'illustration de ce qui précède, on peut considérer que les reliefs dont la taille correspond à moins de quatre zones élémentaires sur la figure 18 ne seront pas physiquement réalisables sur l'organe de transfert d'encre, de sorte que l'image réellement imprimée sur le support sera celle représentée sur la figure 19.

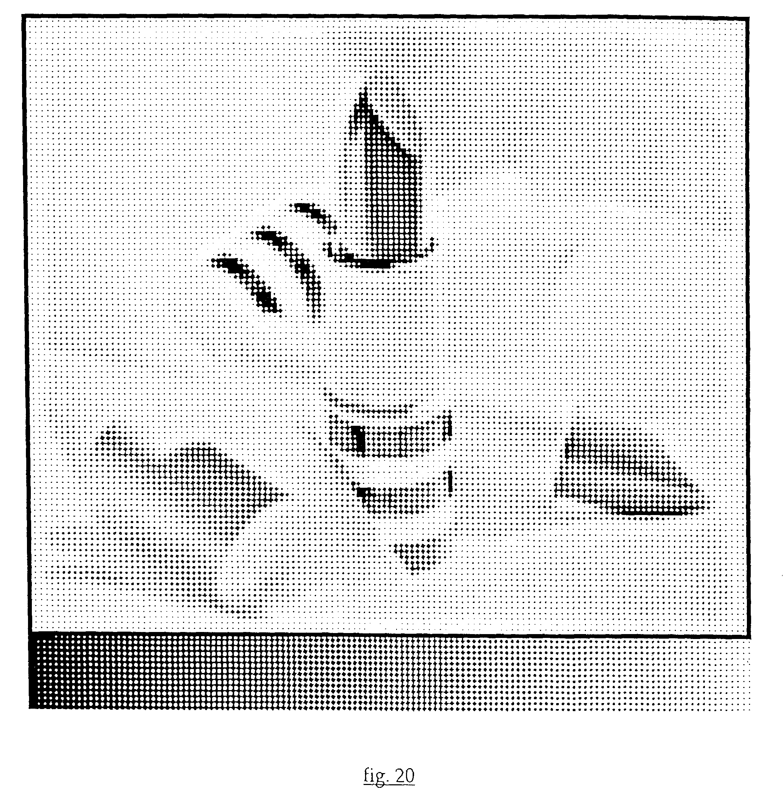

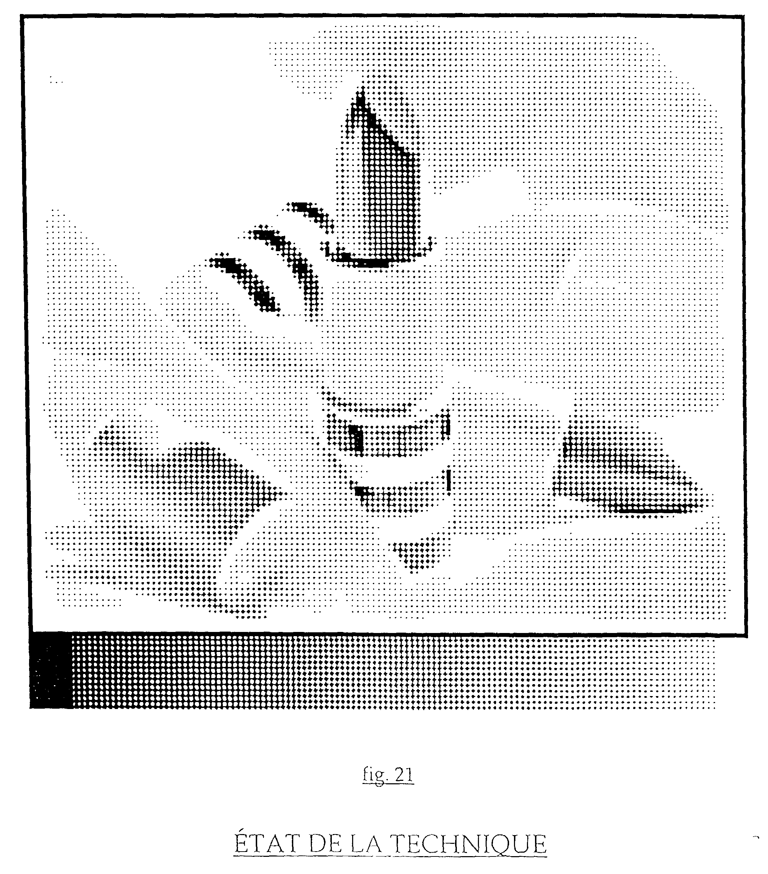

Pour illustrer les conséquences, sur le rendu visuel de l'image imprimée, de l'absence de reproduction des nuances dans les hautes lumières, on comparera utilement les figures 20 et 21.

Sur la figure 20, on a représenté une image restituant l'ensemble des nuances, des plus faibles valeurs aux plus élevées.

Sur la figure 21, on a représenté la même image, mais sans les nuances dont les valeurs sont inférieures à un seuil donné, lequel dépend en pratique des limitations physiques propres à la technique d'impression utilisée.

La reproduction des nuances de valeurs élevées pose également problème, notamment dans le cas ou la technique d'impression utilisée est la flexographie ou l'offset sec, car si la solidité des reliefs formés sur l'organe de transfert d'encre n'est plus en cause, il y a une tendance au bouchage des zones élémentaires isolées non encrées du fait du phénomène d'engraissement lors de l'impression.

Cela se traduit par une incapacité à restituer fidèlement sur le support imprimé les nuances dans les basses lumières.

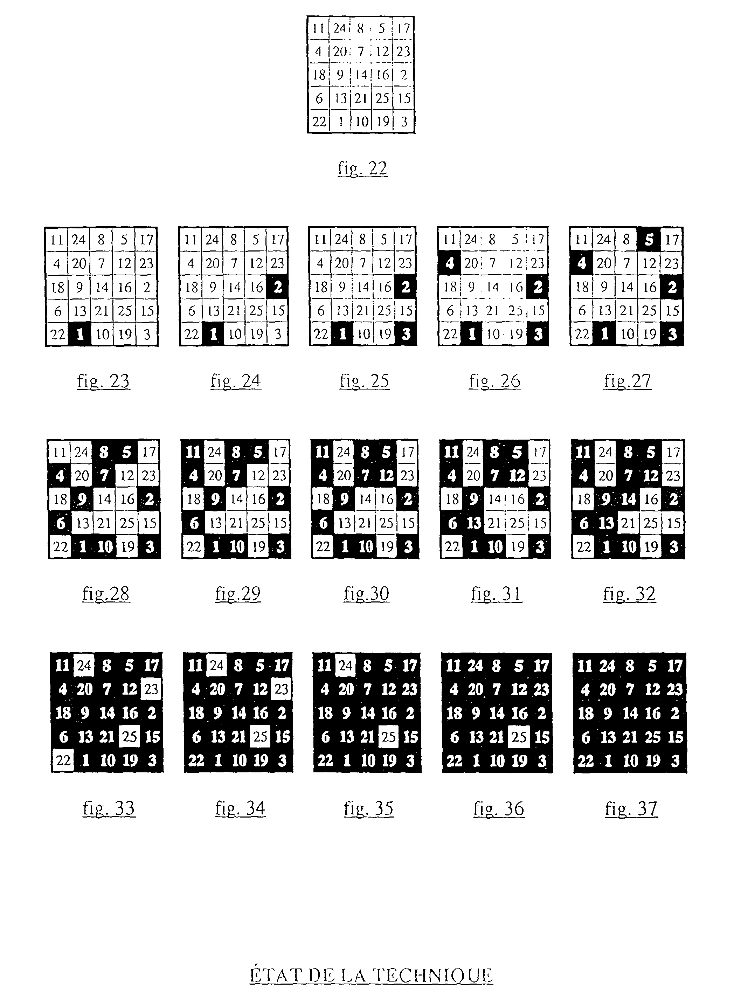

Par ailleurs, dans le procédé d'impression utilisant une trame dite aléatoire, la conversion de chaque valeur de nuance en rapport choisi surface encrée/non encrée dans la cellule de base s'effectue en remplissant les zones élémentaires non plus à partir du centre mais d'une manière aléatoire ou pseudo-aléatoire de sorte que les zones élémentaires encrées se trouvent réparties sur l'ensemble de la cellule de base, comme illustré sur les figures 22 à 37.

On a numéroté sur la figure 22 les zones élémentaires dans l'ordre selon lequel elles sont successivement couvertes d'encre au fur et à mesure que la valeur de la nuance à reproduire augmente.

Les figures 23 à 27 représentent ainsi respectivement les zones élémentaires qui sont encrées pour traduire les valeurs de nuance allant de 1 à 5, les figures 28 à 32 représentent respectivement celles qui sont encrées pour traduire les valeurs de nuance allant de 10 à 14, et les figures 33 à 37 représentent respectivement celles qui sont encrées pour traduire les valeurs de nuance allant de 21 à 25.

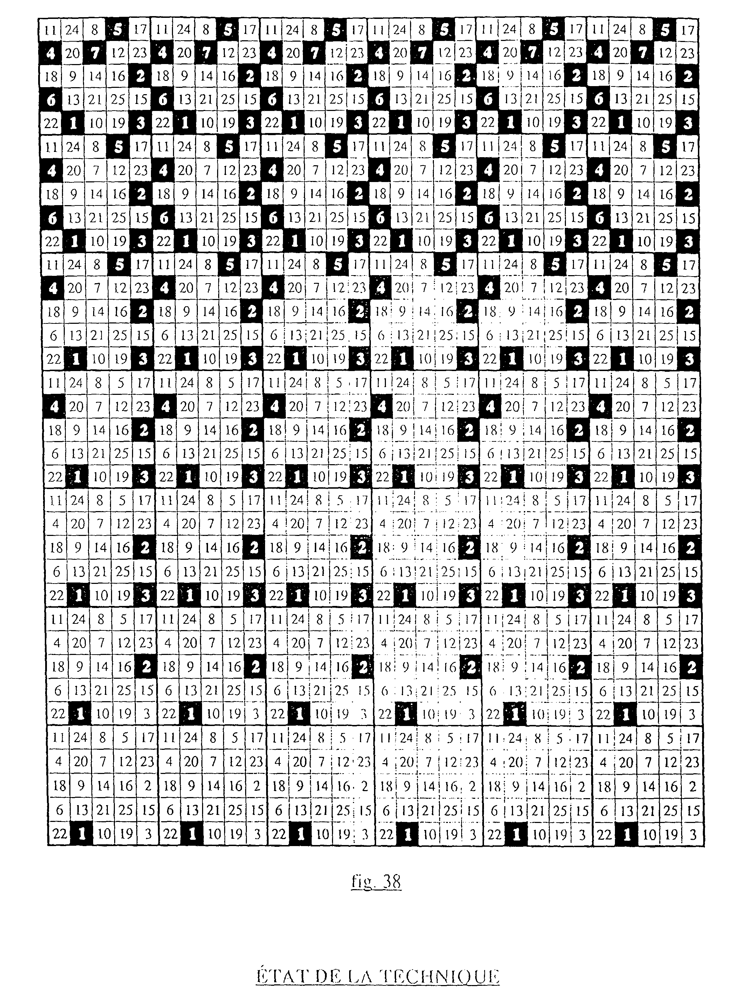

Dans le cas où l'image digitalisée à reproduire serait un dégradé avec des valeurs de nuance croissantes de bas en haut, correspondant à la figure 17, on obtiendrait sur l'organe de transfert d'encre ou sur le support imprimé, si la technique d'impression utilisée ne souffrait d'aucune limitation, la répartition des surfaces encrées représentée sur la figure 38.

Toutefois, la reproduction des nuances dans les hautes lumières se heurte aux limitations physiques de la technique d'impression utilisée, de sorte que dans la réalité toutes les nuances de l'image digitalisée ne sont pas reproduites convenablement sur le support imprimé.

On a proposé pour remédier au problème de la restitution des nuances dans les hautes lumières, d'imprimer les zones de l'image concernées par ce problème avec une linéature moitié moindre de manière à bénéficier de points de trame plus gros.

Toutefois, la transition entre les zones de linéatures différentes est nettement visible sur l'image ainsi obtenue, ce qui n'est pas souhaitable.

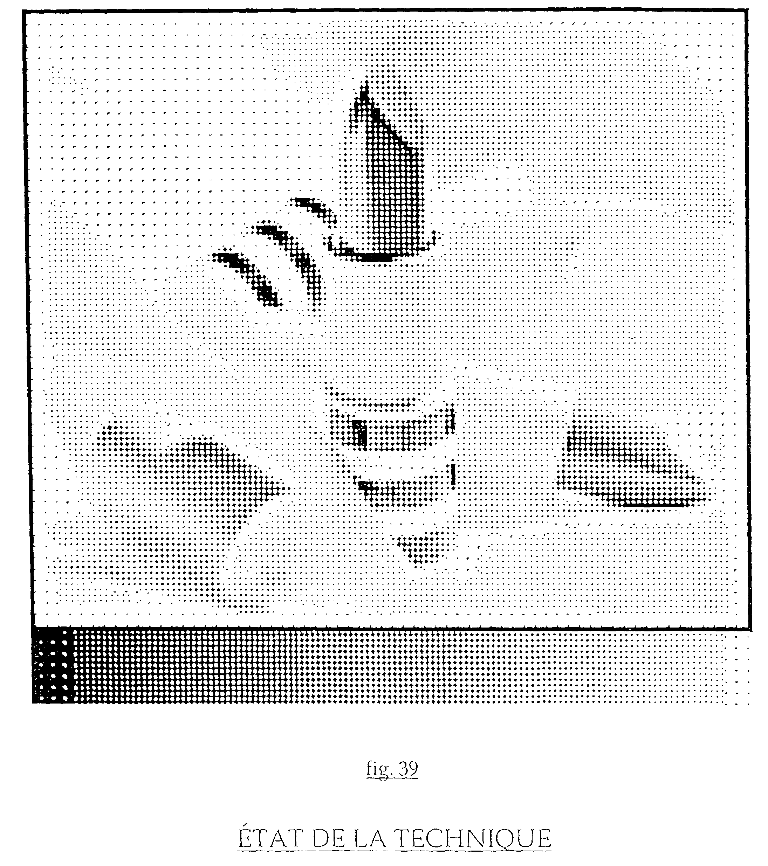

On a représenté sur la figure 39 une telle image.

D'une manière générale, quelle que soit la technique d'impression utilisée, par exemple l'offset humide, l'offset sec, l'héliogravure, la sérigraphie, la tampographie, la flexographie, ou encore l'impression à jet d'encre, la restitution des nuances dans les hautes et/ou basses lumières pose problème, que ce soit pour des raisons de résistance mécanique des reliefs ou de bouchage lors de l'impression ou pour d'autres raisons telles que la diffraction de la lumière par le film photographique utilisé pour la photogravure ou la photosensibilisation de l'organe de transfert d'encre, ou à cause encore de phénomènes d'engraissement, de séchage de l'encre, de tension superficielle, etc.

On connaît par la demande de brevet européen EP-A-0 740 457 un procédé dans lequel on passe d'une modulation d'amplitude à une ondulation de fréquence dans les hautes lumières. Ce procédé permet de s'affranchir des problèmes de restitution des points dans les hautes lumières, rencontrés avec la modulation d'amplitude. Toutefois, ce procédé n'offre pas toujours des résultats satisfaisants sur le plan visuel car l'oeil a tendance à percevoir comme entachée d'un défaut la zone de l'image qui est tramée en modulation de fréquence, puisque l'espacement des points semble irrégulier au vu du reste de l'image qui est tramé en modulation d'amplitude.

La présente invention vise à améliorer la restitution des nuances dans les hautes et/ou basses lumières, quelle que soit la technique d'impression utilisée.

L'invention a notamment pour objet un procédé de conversion pour générer une image en demi-ton à partir d'une image digitalisée comportant un ensemble de pixels ayant chacun une valeur de nuance, à chaque pixel de l'image digitalisée étant associée une cellule de base de l'image en demi-ton, subdivisée en autant de zones élémentaires qu'il y a de valeurs de nuances non-nulles, caractérisé par le fait qu'il comporte les étapes consistant à :
- analyser l'image digitalisée par fenêtres d'analyse constituées chacune par le regroupement d'un nombre prédéterminé de pixels, et
- au moins dans le cas où la valeur de nuance de l'un au moins des pixels d'une fenêtre d'analyse tombe dans un premier ensemble de valeurs de nuance prédéterminé, effectuer une conversion de la valeur de nuance de chacun des pixels de la fenêtre d'analyse en un rapport choisi surface encrée/non encrée dans chacune des cellules de base correspondant respectivement à ces pixels, ces cellules de base formant ensemble une super-cellule, ladite conversion s'effectuant en respectant une répartition des zones élémentaires et un ordre de remplissage prédéterminés en fonction de la valeur de nuance à convertir, cette répartition et cet ordre de remplissage tenant compte de la technique d'impression utilisée pour reproduire l'image en demi-ton sur un support, limage obtenue présentant deux zones ayant des linéatures différentes sans transition brutale entre elles.

Dans une mise en oeuvre particulière, la conversion en un rapport choisi surface encrée/non encrée dans chacune des cellules de base de la super-cellule s'effectue en respectant une répartition des zones élémentaires et un ordre de remplissage prédéterminés, fonction de la valeur de nuance à convertir, et ce quelle que soit la valeur de nuance des pixels de la fenêtre d'analyse.

Toujours dans une mise en oeuvre particulière, lorsque toutes les valeurs de nuance des pixels de la fenêtre d'analyse tombent dans un deuxième ensemble de valeurs de nuance prédéterminé, le remplissage des zones élémentaires de toutes les cellules de base de la super-cellule s'effectue de la même manière.

La répartition et l'ordre de remplissage prédéterminés des zones élémentaires des cellules de base constituant la super-cellule assurent avantageusement le regroupement des zones élémentaires remplies au sein de la super-cellule lorsque la valeur de nuance de l'un au moins des pixels de la fenêtre d'analyse est inférieure à un seuil donné.

De préférence, les zones élémentaires remplies sont regroupées par pavés de n zones élémentaires au sein de chaque cellule de base appartenant à la super-cellule, n étant un multiple du nombre de cellules de base constituant la super-cellule.

La répartition et l'ordre de remplissage prédéterminés des cellules de base constituant la super-cellule peuvent également avantageusement assurer le regroupement des zones élémentaires vides au sein de la super-cellule lorsque la valeur de nuance de l'un au moins des pixels de la fenêtre d'analyse est supérieure à un seuil donné.

De préférence, les zones élémentaires vides sont alors regroupées par pavés de n zones élémentaires au sein de chaque cellule de base appartenant à la super-cellule, n étant un multiple du nombre de cellules de base constituant la super-cellule.

Chaque pavé peut être positionné au centre de la cellule de base dans laquelle il se trouve.

En variante, chaque pavé peut être positionné de manière excentrée dans la cellule de base dans laquelle il se trouve.

L'invention a encore pour objet un procédé de reproduction d'une image digitalisée au moyen d'une technique d'impression telle que l'offset humide, l'offset sec, l'héliogravure, la sérigraphie, la tampographie ou la flexographie, mettant en oeuvre un organe de transfert d'encre sur lequel les nuances des pixels de l'image à reproduire ont été converties en rapports choisis surfaces encrées/non encrées par le procédé de conversion précité.

Grâce à l'invention, il est possible de restituer plus fidèlement les différentes nuances dans les hautes et/ou basses lumières malgré les limitations de la technique d'impression utilisée.

Dans l'invention, la construction des points s'effectue au sein de chaque super-cellule selon une géométrie prédéterminée et non de manière aléatoire. En d'autres termes, la construction des points dans les hautes et/ou les basses lumières ne s'effectue pas en modulation de fréquence, mais selon un ordre de remplissage et une répartition prédéterminés permettant de grouper les zones élémentaires encrées dans les hautes lumières et/ou les vides dans les basses lumières et d'obtenir deux zones de linéatures différentes sans transition brutale entre les deux.

L'invention permet notamment de restituer les variations de nuances dans les hautes lumières grâce au fait que les zones élémentaires encrées ne sont plus isolées.

Ainsi, lorsque la technique d'impression est l'offset sec ou la flexographie et met en oeuvre la gravure de reliefs sur l'organe de transfert d'encre, la fragilité de ces derniers est réduite du fait que leur taille est plus importante, puisqu'ils sont alors conformés pour reproduire des pavés composés de plusieurs zones élémentaires, et non plus des zones élémentaires isolées.

De même, que la technique d'impression soit l'héliogravure et mette en oeuvre des creux sur l'organe de transfert d'encre, la sérigraphie et mette en oeuvre des ajours sur l'organe de transfert d'encre ou encore l'offset humide et mette en oeuvre une répulsion eau/huile sur l'organe de transfert d'encre, l'invention permet, grâce au fait que les zones élémentaires encrées destinées à la reproduction des nuances dans les hautes lumières ou non encrées destinées à la reproduction des nuances dans les basses lumières sont groupées, de ne pas être confronté aux problèmes précités liés à l'isolement de ces zones élémentaires.

En outre, en cas de photogravure ou de photosensibilisation de l'organe de transfert d'encre, les phénomènes de diffraction de la lumière sont diminués du fait que les zones élémentaires ainsi groupées diffractent dans une moindre mesure la lumière que les zones élémentaires isolées.

L'invention a encore pour objet un procédé de reproduction d'une image digitalisée au moyen d'une technique d'impression à jet d'encre, caractérisé par le fait que l'on imprime une image en demi-ton obtenue par le procédé de conversion précité.

On bénéficie alors dans ce cas d'une plus fidèle restitution de l'image en demi-ton dans les basses lumières, car les distorsions dues au phénomène d'engraissement sont réduites.

L'invention a encore pour objet un organe de transfert d'encre comprenant une zone destinée à restituer différentes nuances dans les hautes lumières, caractérisé par le fait que ladite zone présente une pluralité de surfaces encrées ayant des dimensions identiques et des surfaces non encrées dont les dimensions sont supérieures ou égales à celles d'une cellule de base.

L'invention a encore pour objet un organe de transfert d'encre comprenant une zone destinée à restituer différentes nuances dans les basses lumières, caractérisé par le fait que ladite zone présente une pluralité de surfaces non encrées ayant des dimensions identiques et des surfaces encrées dont les dimensions sont supérieures ou égales à celles d'une cellule de base.

L'invention a encore pour objet un support imprimé comprenant une zone restituant différentes nuances dans les hautes lumières, caractérisé par le fait que ladite zone présente une pluralité de surfaces encrées ayant des dimensions identiques et des surfaces non encrées dont les dimensions sont supérieures ou égales à celles d'une cellule de base.

L'invention a encore pour objet un support imprimé comprenant une zone restituant différentes nuances dans les basses lumières, caractérisé par le fait que ladite zone présente une pluralité de surfaces non encrées ayant des dimensions identiques et des surfaces encrées dont les dimensions sont supérieures ou égales à celles d'une cellule de base.

L'invention a encore pour objet un support comportant une image en demi-ton obtenu par la mise en oeuvre du procédé précité.

L'invention sera mieux comprise à la lecture de la description qui va suivre, d'exemples de mise en oeuvre non limitatifs de l'invention, et au vu du dessin annexé sur lequel :
- les figures 1 à 39, précédemment décrites, illustrent l'état de la technique,

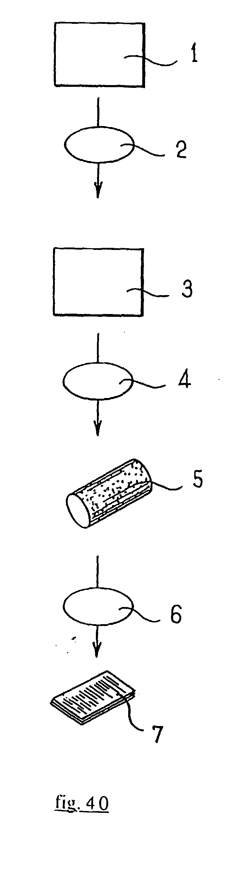

- la figure 40 représente de façon schématique le déroulement des différentes étapes d'un procédé de reproduction d'une image digitalisée conformément à un exemple de mise en oeuvre de l'invention,

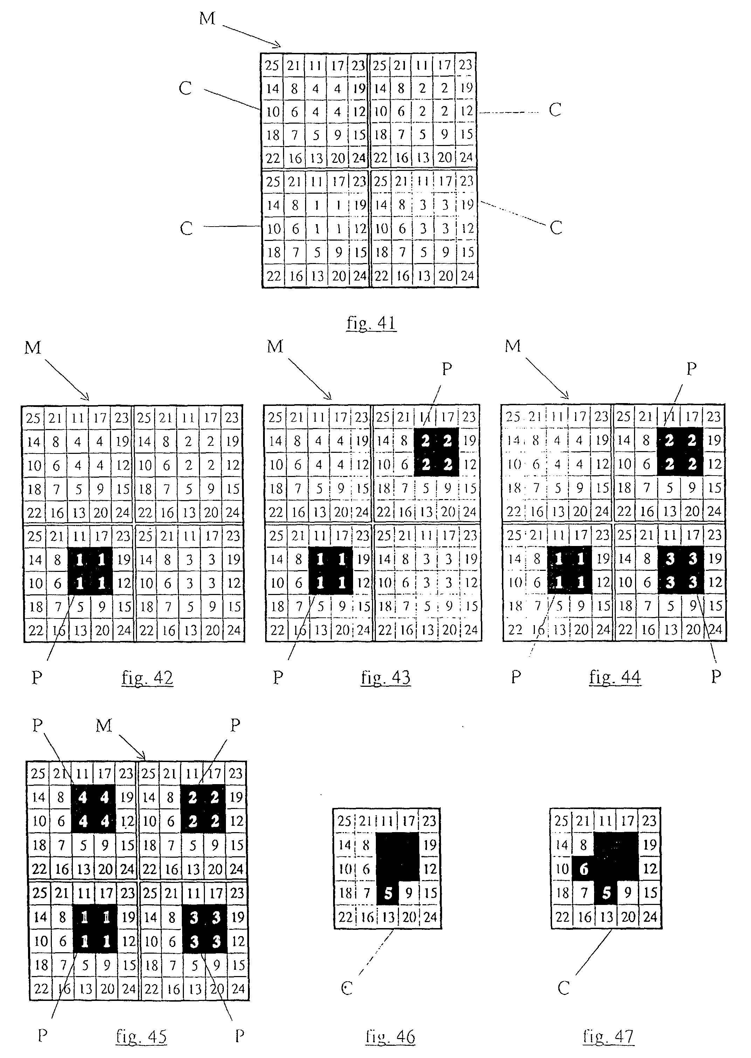

- les figures 41 à 51 illustrent un premier exemple de mise en oeuvre de l'invention,
- les figures 52 à 66 illustrent un deuxième exemple de mise en oeuvre de l'invention,
- les figures 67 à 75 illustrent un troisième exemple de mise en oeuvre de l'invention,

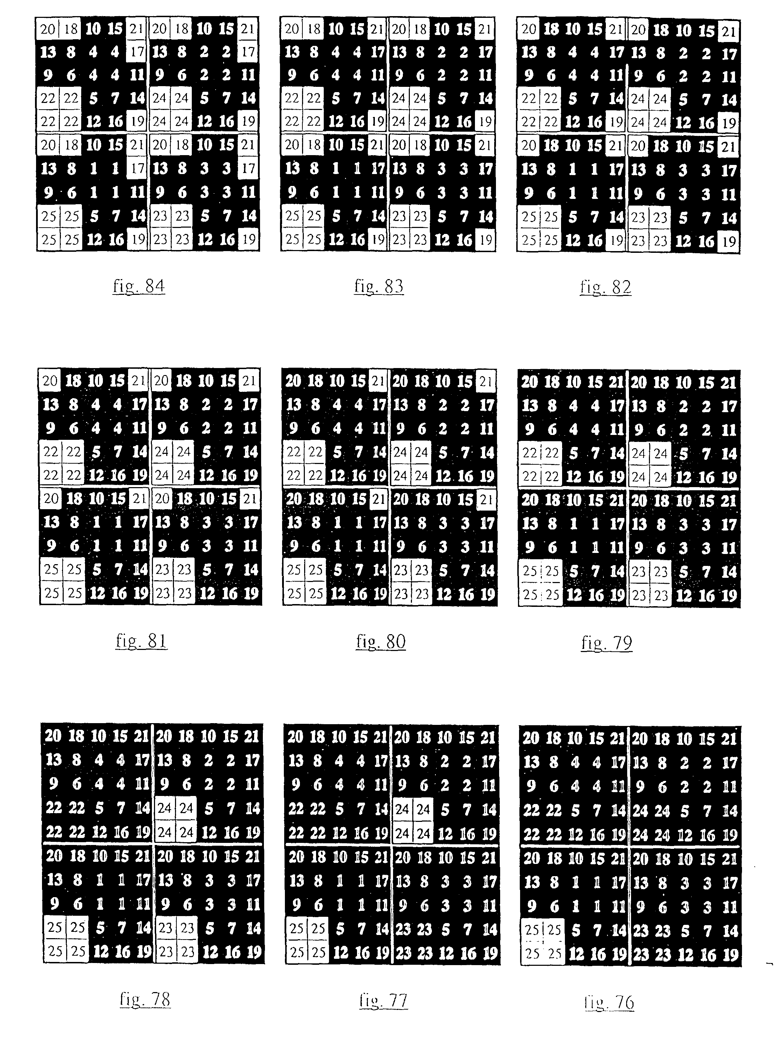

- les figures 76 à 86 illustrent un quatrième exemple de mise en oeuvre de l'invention, et

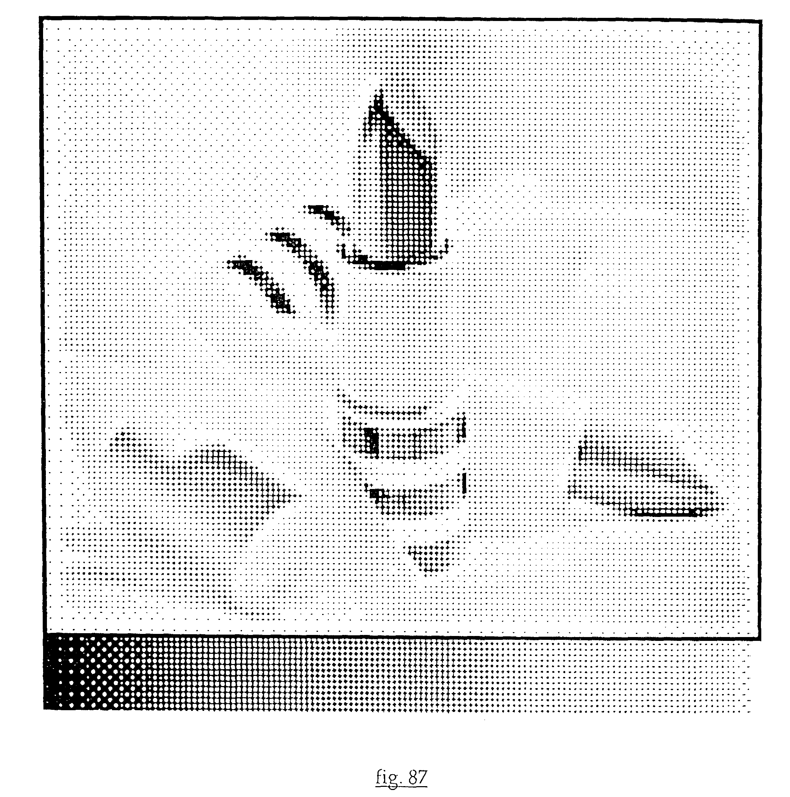

- la figure 87 illustre l'amélioration de la restitution des nuances dans les hautes lumières grâce à l'invention.

On suppose dans la suite que la technique d'impression utilisée est la flexographie et fait intervenir la gravure d'un organe de transfert d'encre.

On part d'une image digitalisée 1, dans laquelle la valeur de nuance de chaque pixel est codée sur 2ⁿ bits, 8 bits par exemple, soit 256 valeurs au total.

Au moyen d'un procédé de conversion qui sera décrit plus loin, on réalise dans une première étape 2 une image en demi-ton, laquelle est stockée dans un fichier 3.

Ensuite, on réalise à l'étape suivante 4, à partir de ce fichier 3, un film qui sert à la photogravure d'un organe de transfert d'encre 5.

Sur cet organe de transfert d'encre 5, les valeurs de nuance des pixels de l'image digitalisée sont restituées par des rapports choisis surfaces encrées/non encrées.

Lors de l'étape suivante 6, l'organe de transfert d'encre 5 est appliqué sur le support 7 à imprimer, de façon connue en soi.

On va maintenant décrire la mise en oeuvre à l'étape 2 précitée, d'un premier exemple de procédé de conversion selon l'invention, en référence aux figures 41 à 51, dans le but plus particulièrement d'améliorer la restitution des nuances dans les hautes lumières.

On supposera dans un souci de simplification de l'exposé et du dessin que la valeur de nuance de chaque pixel de l'image digitalisée à reproduire n'est codée que sur 26 valeurs de 0 à 25, sachant que dans la pratique le nombre de valeurs de nuance est supérieur, étant égal à 256 par exemple.

A chaque pixel de l'image digitalisée correspond une cellule de base sur l'image en demi-ton. Cette cellule de base est divisée en vingt-cinq zones élémentaires identiques.

Dans le procédé de conversion, on commence par décomposer l'image digitalisée en un ensemble de fenêtres d'analyse F constituées chacune d'un nombre prédéterminé de pixels dans les sens horizontal et vertical, par exemple deux fois deux pixels dans l'exemple considéré.

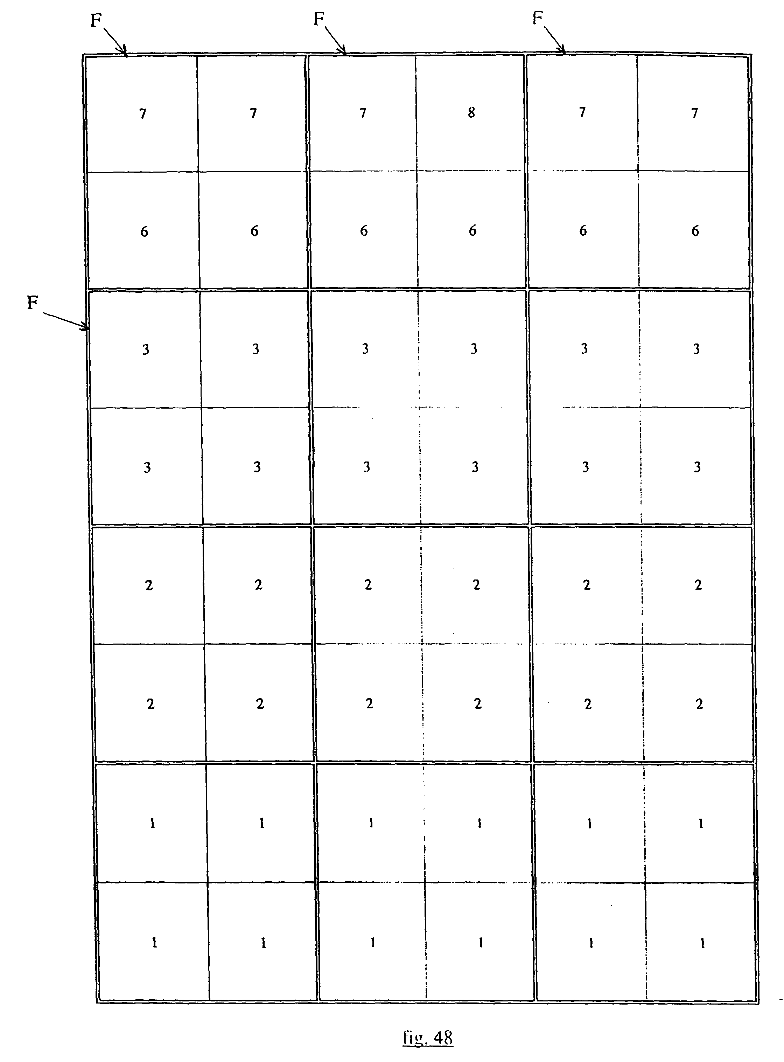

On a représenté sur la figure 48 une succession de telles fenêtres F sur une image digitalisée.

A chaque fenêtre d'analyse F, on associe une super-cellule M sur l'image en demi-ton, constituée par le même nombre de lignes et de colonnes de cellules de base qu'il y a de respectivement de pixels dans les sens horizontal et vertical dans la fenêtre d'analyse considérée, soit ici un groupe de deux fois deux cellules de base C comme représenté sur la figure 41.

On a numéroté 1 à 25 sur cette figure les zones élémentaires de chacune des cellules de base C dans l'ordre selon lequel elles sont encrées, en fonction de la valeur de nuance à reproduire.

On a illustré sur les figures 42 à45 la manière dont la super-cellule M est progressivement encrée lorsque les valeurs de nuance de tous les pixels de la fenêtre d'analyse sont égales à 1...4 respectivement.

Comme on peut le constater, le remplissage de la super-cellule M s'effectue par pavés P de quatre zones élémentaires, de sorte qu'il n'y a jamais de zone élémentaire encrée isolée.

Le nombre de zones élémentaires constituant chaque pavé P est choisi de telle sorte que ce pavé ait des dimensions supérieures aux dimensions minimales à partir desquelles on se heurte aux limitations physiques de la technique d'impression utilisée.

Lorsque tous les pixels de la fenêtre d'analyse ont leur valeur de nuance supérieure à 4, les cellules de base correspondantes comportent chacune au moins quatre zones élémentaires encrées et regroupées.

L'ordre de remplissage et la répartition des zones élémentaires en fonction des valeurs de nuance à reproduire sont, au-delà de la valeur de nuance 4, les mêmes pour toutes les cellules de base C constituant la super-cellule M.

Le remplissage des cellules de base s'effectue dans l'exemple illustré en remplissant d'abord les zones élémentaires les plus proches du centre, selon la numérotation reproduite sur les figures 41 à 47.

On a représenté sur les figures 46 et 47 deux cellules de base pour des taux de remplissage respectivement de 5/25 et 6/25, correspondant à des valeurs de nuance 5 et 6.

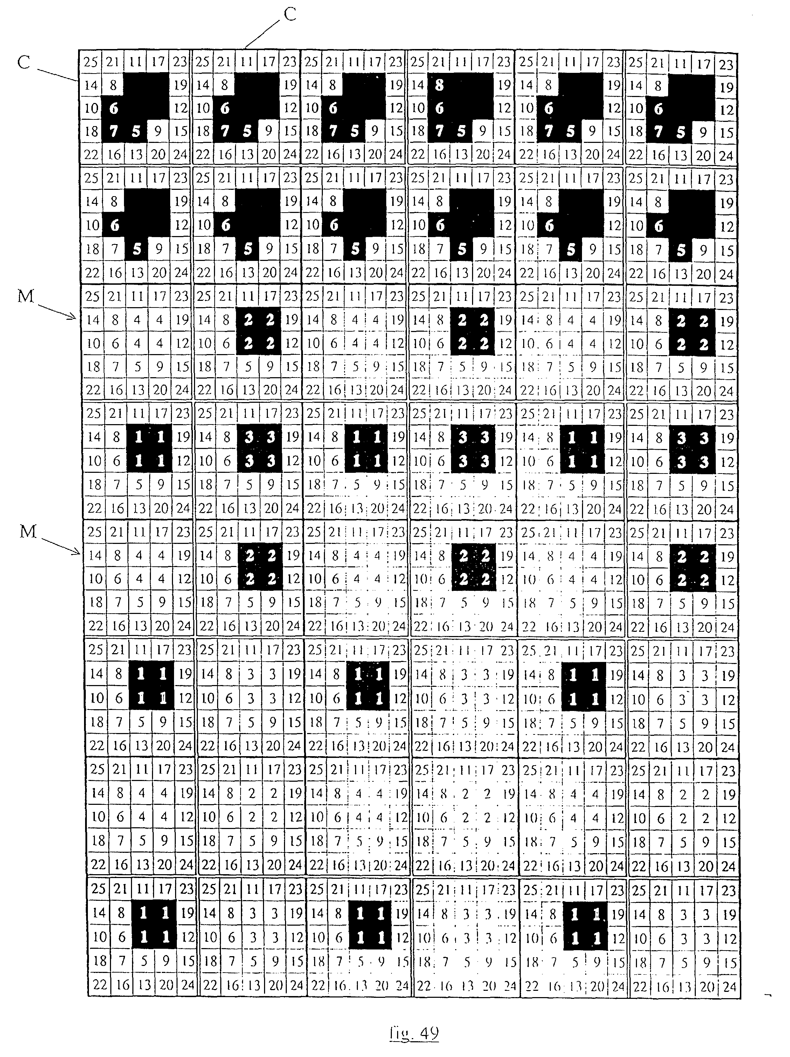

A supposer que les valeurs de nuance des pixels de l'image à reproduire soient celles indiquées sur la figure 48, en appliquant le procédé de conversion qui vient d'être décrit, on obtient sur le support imprimé la répartition des surfaces encrées illustrée sur la figure 49.

On constatera que dans la zone de hautes lumières, les surfaces encrées ont toutes les mêmes dimensions car elles sont constituées par les pavés P.

On remarquera également dans cette zone la présence de cellules de base non encrées.

On remarquera à l'examen de la figure 41, que la cellule de base en haut à gauche ne comporte aucune surface encrée tant que la valeur de nuance du pixel correspondant de la fenêtre d'analyse est inférieure ou égale à 3.

De même, la cellule de base en haut à droite sur la figure 41 ne comporte aucune surface encrée tant que la valeur de nuance du pixel correspondant de la fenêtre d'analyse est inférieure ou égale à 1.

La cellule de base en bas à droite sur la figure 41 ne comporte aucune surface encrée tant que la valeur de nuance du pixel correspondant de la fenêtre d'analyse est inférieure ou égale à 2.

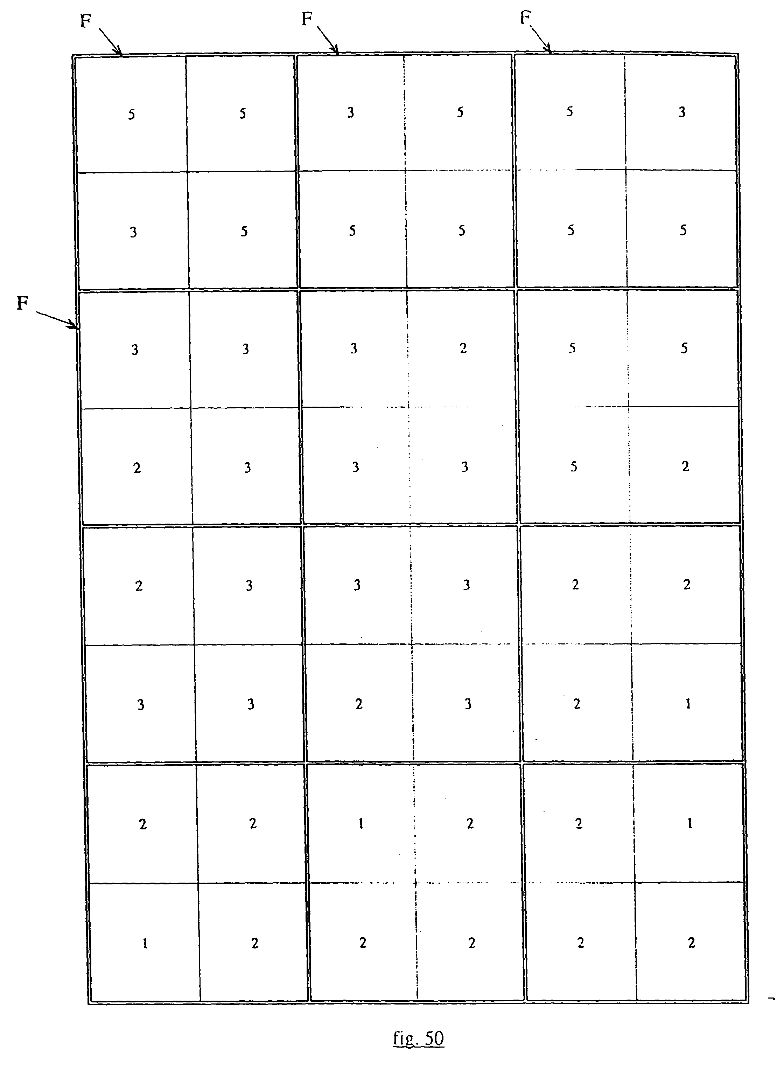

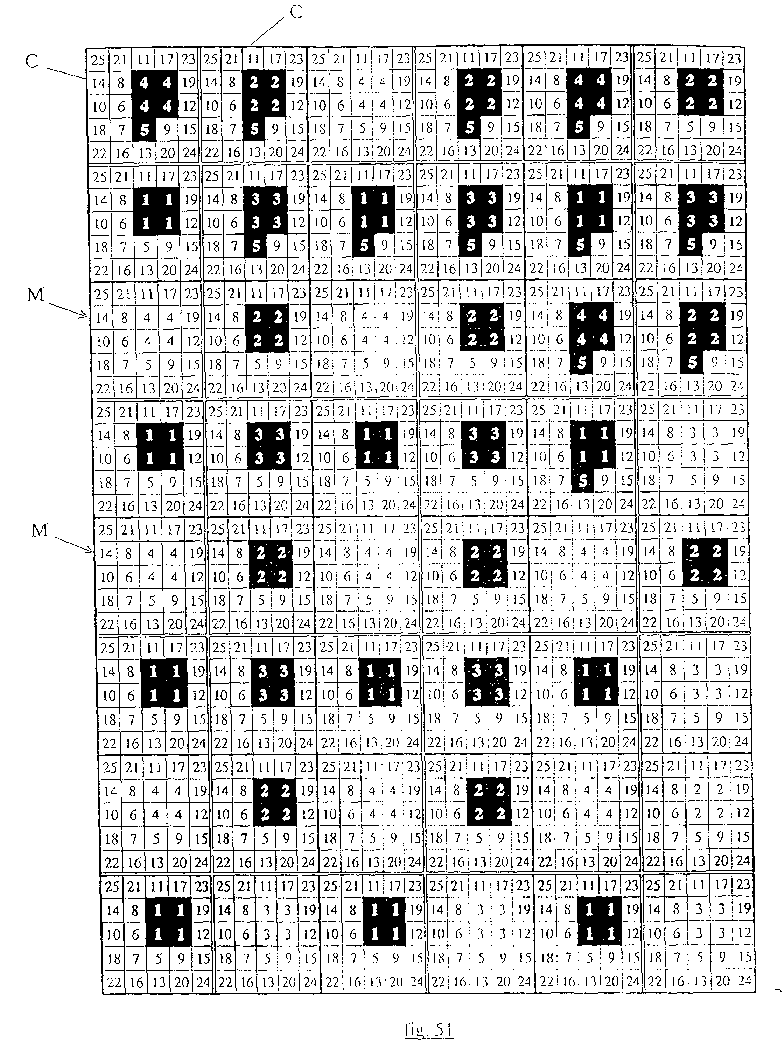

On a représenté sur la figure 50 une autre image digitalisée et sur la figure 51 l'image en demi-ton obtenue en convertissant chaque fenêtre d'analyse en une super-cellule selon le procédé qui vient d'être décrit, c'est-à-dire en utilisant la répartition et l'ordre de remplissage des zones élémentaires dans chaque super-cellule donnée sur la figure 41.

On remarquera qu'il y a une certaine perte d'information lors de la conversion dans les hautes lumières du fait que tous les pixels au sein de chaque fenêtre d'analyse n'ont pas la même valeur.

On comprend ainsi que le procédé de conversion selon l'invention donne des résultats d'autant meilleurs que les variations des valeurs de nuance des pixels de l'image digitalisée sont lentes.

Toutefois, même en cas de variations rapides, l'image en demi-ton obtenue grâce au procédé de conversion selon l'invention, reste contrastée, et il s'avère que les distorsions introduites par l'invention sont difficilement, voire non perceptibles à l'oeil nu.

On a représenté sur la figure 87 une image en demi-ton obtenue par le procédé de conversion selon l'invention.

On remarquera que dans les zones de hautes lumières, on passe à une linéature moitié moindre sans transition brutale.

On a représenté sur les figures 52 à 66, un autre exemple de mise en oeuvre de l'invention.

Cet exemple diffère du précédent notamment par la manière de grouper les zones élémentaires encrées au sein de la super-cellule M afin de restituer les faibles valeurs de nuance.

De plus, dans cet exemple, tant que la valeur de nuance de l'un au moins des pixels de la fenêtre d'analyse est inférieure ou égale à 8, et non plus seulement 4 comme précédemment, les zones élémentaires encrées sont inégalement réparties entre les différentes cellules de base constituant la super cellule M.

Plus particulièrement, le remplissage des zones élémentaires de la super-cellule M s'effectue suivant la répartition et l'ordre de remplissage donnés par la figure 52.

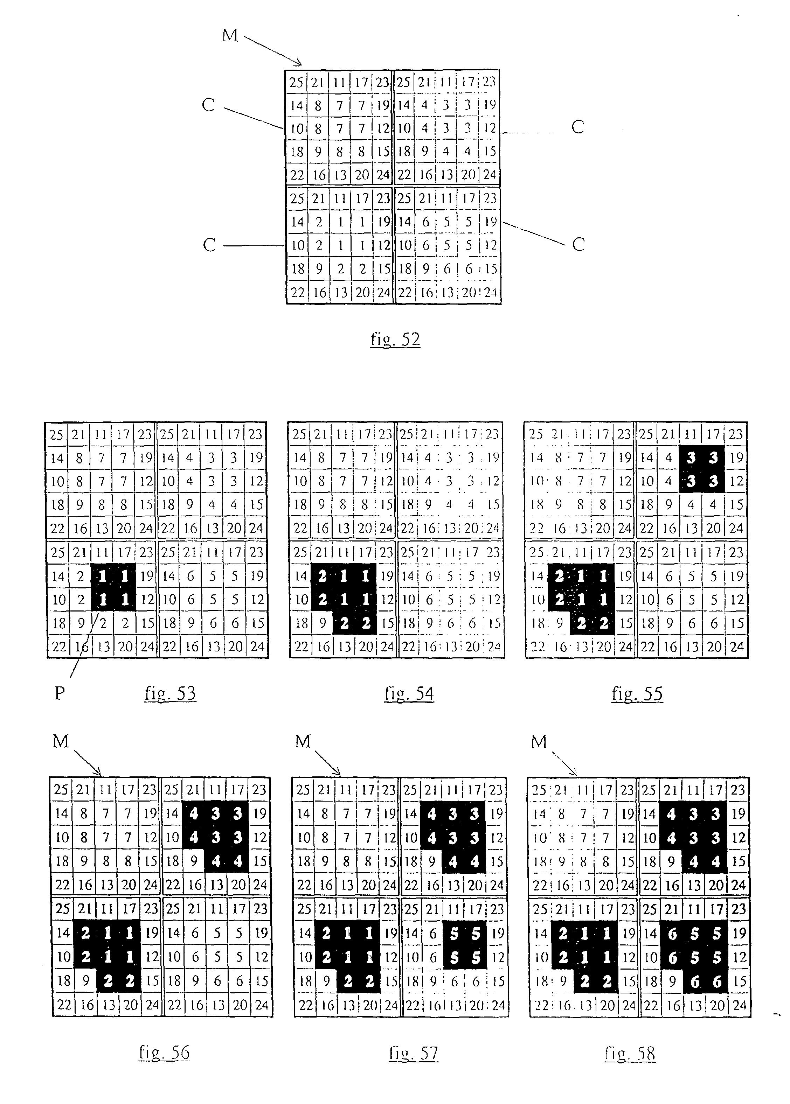

Lorsque la valeur de nuance de tous les pixels composant la fenêtre d'analyse est égale à 1, cette valeur est convertie en surface encrée équivalente au sein de la super-cellule M par le seul remplissage d'un pavé P de quatre zones élémentaires de la cellule de base C située en bas à gauche, comme illustré sur la figure 53.

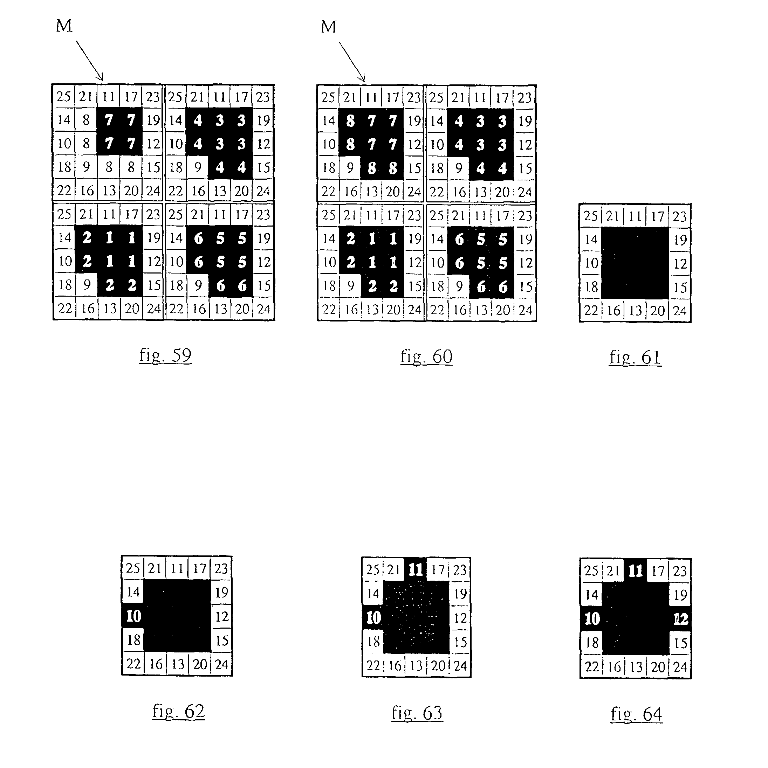

De même, lorsque la valeur de nuance de tous les pixels de la fenêtre d'analyse est égale à 2, il y a remplissage additionnel de quatre zones élémentaires adjacentes à ce pavé, comme illustré sur la figure 57, et lorsque la valeur de nuance de tous les pixels de la fenêtre d'analyse est égale à 3, il y a remplissage additionnel d'un nouveau pavé P de quatre zones élémentaires dans la cellule de base C située en haut à droite, comme illustré sur la figure 55.

On a illustré sur les figures 56 à 60 la manière dont s'effectue le remplissage de la super-cellule M lorsque tous les pixels de la fenêtre d'analyse ont les valeurs de nuances égales à 4...8 respectivement.

Lorsque dans la fenêtre d'analyse les valeurs de nuance de tous les pixels sont supérieures à 8, le remplissage s'effectue pour chacune des cellules de base C avec la même distribution des zones élémentaires encrées en fonction des valeurs de nuance à reproduire, comme illustré sur les figures 61 à 64 pour les valeurs de nuances 9 à 12 respectivement.

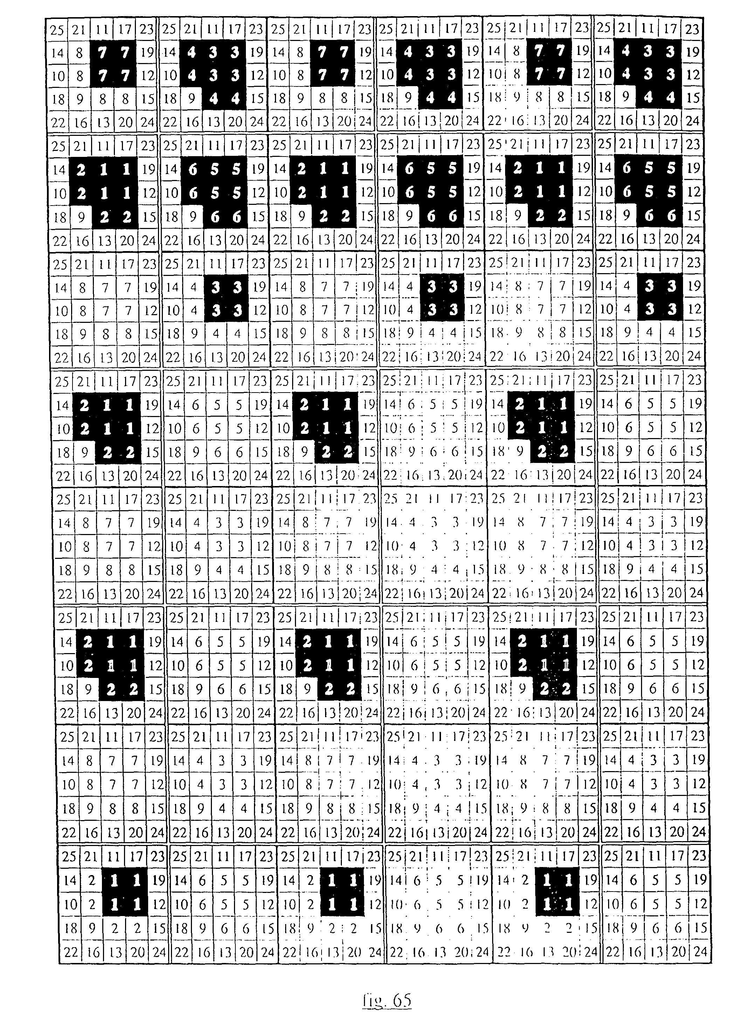

On a représenté sur la figure 65 l'image en demi-ton obtenue par la conversion de l'image digitalisée de la figure 48 en utilisant le procédé de conversion qui vient d'être décrit, c'est-à-dire la répartition et l'ordre de remplissage des zones élémentaires de la super-cellule donnés par la figure 52.

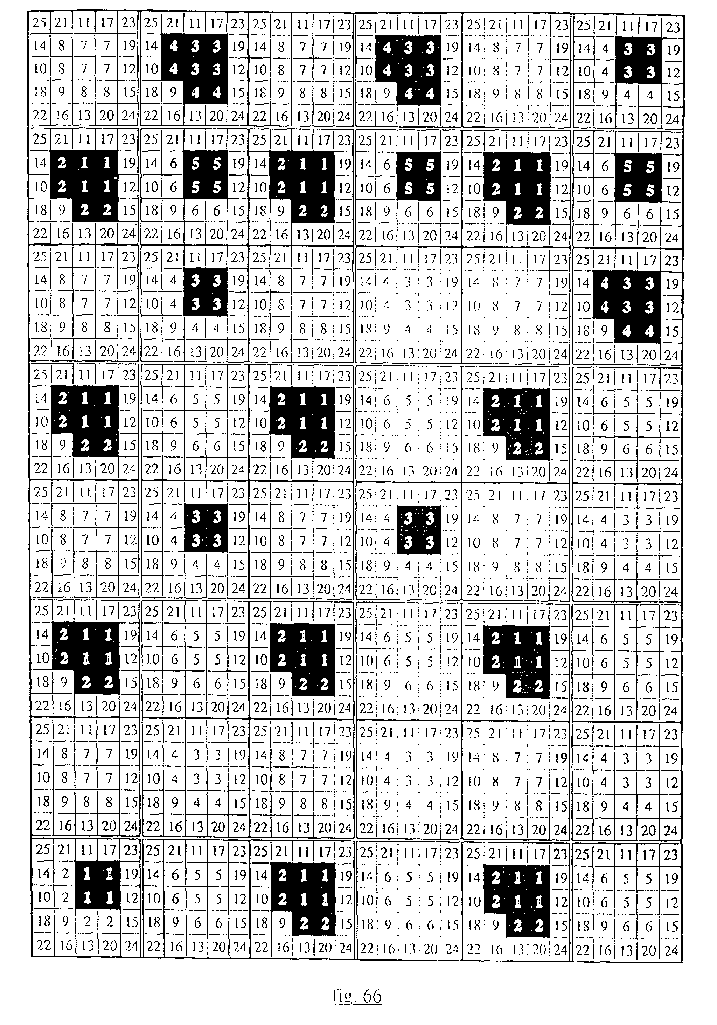

On a représenté sur la figure 66 l'image en demi-ton obtenue par la conversion de l'image digitalisée de la figure 50 en utilisant ce dernier procédé de conversion.

En comparant les figures 66 et 51 notamment, on remarquera que les images en demi-ton obtenues sont différentes selon le modèle de répartition et d'ordre de remplissage des zones élémentaires utilisé.

Dans le cas de la répartition et de l'ordre de remplissage des zones élémentaires donnés par la figure 52, la cellule de base située en haut à gauche sur cette figure ne comporte aucune zone élémentaire encrée tant que la valeur de nuance du pixel correspondant de la fenêtre d'analyse est inférieure ou égale à 6.

La cellule de base située en haut à droite sur la figure 52 ne comporte aucune zone élémentaire encrée tant que la valeur de nuance du pixel correspondant de la fenêtre d'analyse est inférieure ou égale à 2.

La cellule de base située en bas à droite sur la figure 52 ne comporte aucune zone élémentaire encrée tant que la valeur de nuance du pixel correspondant de la fenêtre d'analyse est inférieure ou égale à 4.

Dans le cas de l'image digitalisée de la figure 50, il se peut que dans certains cas, l'une seulement des cellules de base de la super-cellule comporte des zones élémentaires encrées alors que certains pixels de la fenêtre d'analyse ont des valeurs de nuance supérieures ou égales à 2.

C'est le cas par exemple de la fenêtre d'analyse située en bas à gauche sur la figure 50, qui est convertie sur l'image en demi-ton de la figure 66 par une super-cellule dont seule la cellule de base située en bas à gauche comporte un pavé de quatre zones élémentaires encrées.

On a illustré sur les figures 67 à 75, une troisième manière d'effectuer le remplissage de la super-cellule M.

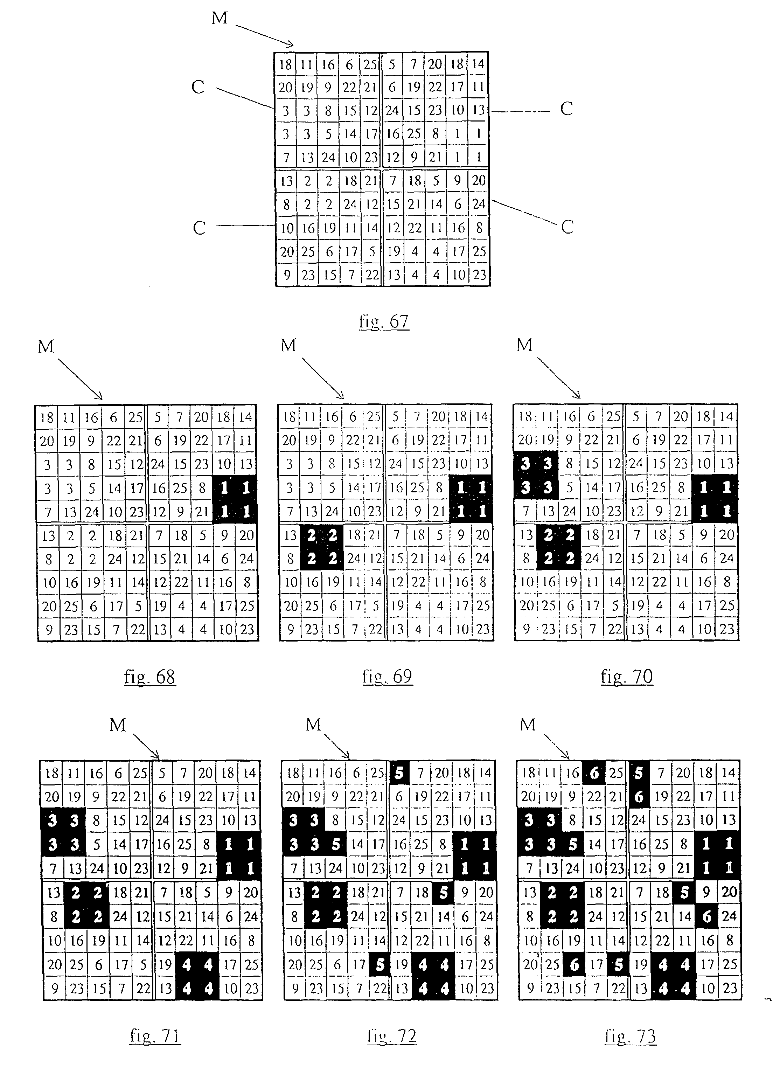

On a représenté respectivement sur les figures 68 à 71 les surfaces encrées de la super-cellule M lorsque tous les pixels de la fenêtre d'analyse ont des valeurs de nuance respectivement égales à 1...4.

Comme on peut le constater à l'examen de ces figures, le remplissage de la super-cellule M s'effectue par pavés de quatre zones élémentaires.

La distribution des zones élémentaires encrées au sein de chacune des cellules de base constituant la super-cellule M diffère d'une cellule de base à l'autre.

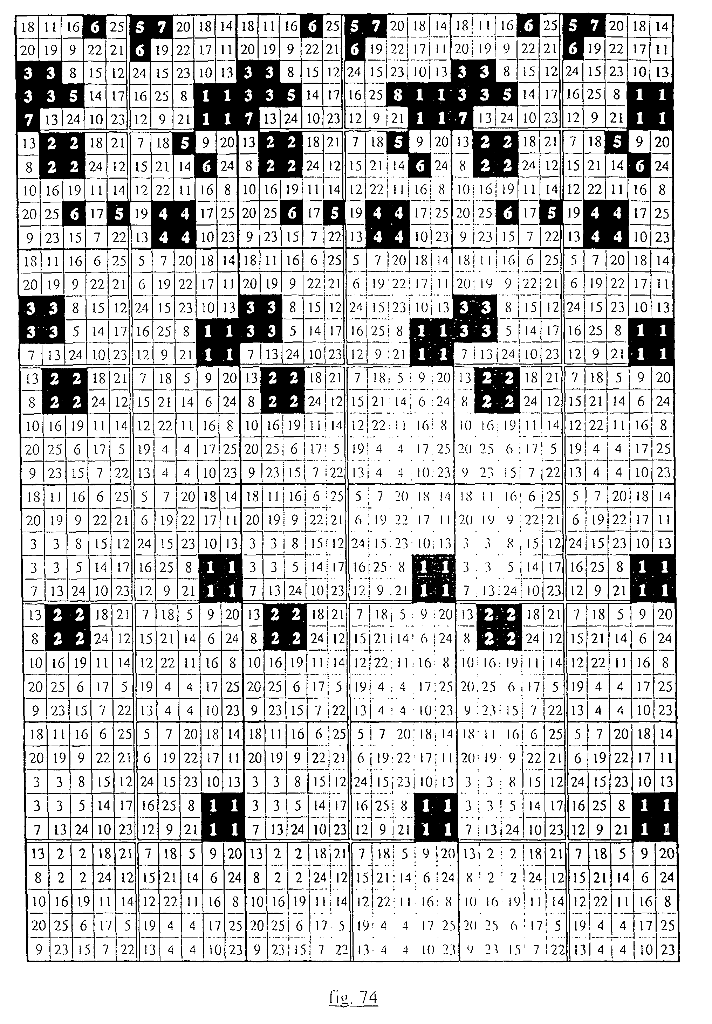

On a représenté sur la figure 74 l'image en demi-ton obtenue par la mise en oeuvre du procédé de conversion présentement décrit, à partir de l'image digitalisée de la figure 48.

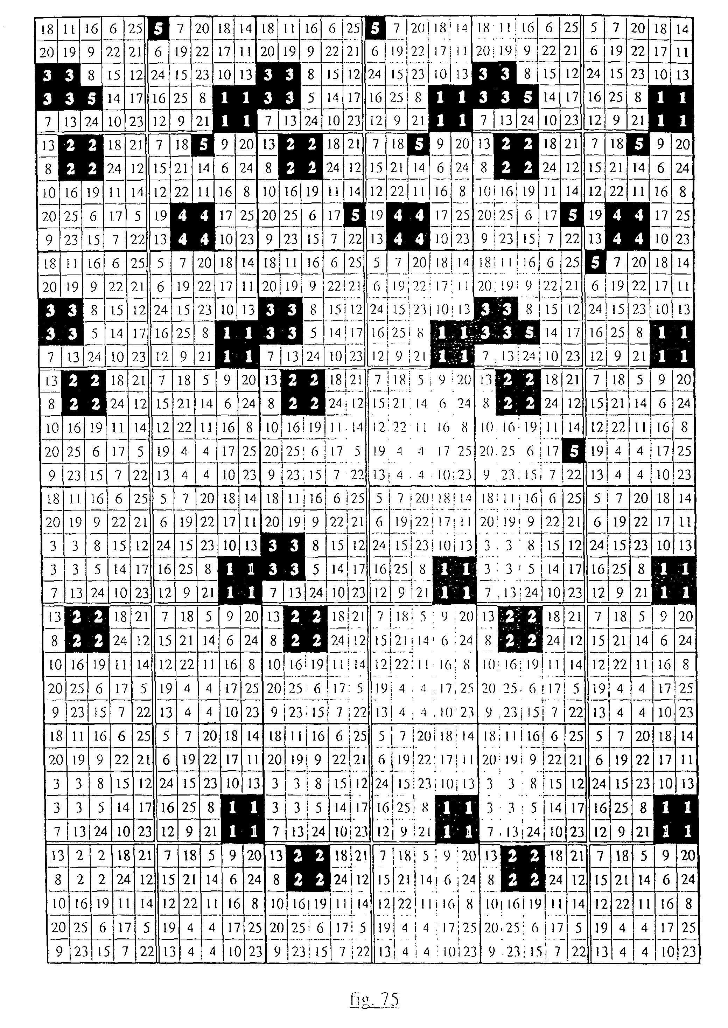

On a également représenté sur la figure 75 l'image en demi-ton obtenue par conversion de l'image digitalisée de la figure 50.

En plus de résoudre le problème de la restitution des nuances dans les hautes lumières par le regroupement des zones élémentaires encrées, comme on vient de le décrire, l'invention permet encore de résoudre le problème du bouchage des surfaces non encrées isolées en raison du phénomène d'engraissement, lequel se produit par exemple lorsque seule une zone élémentaire au sein de la cellule de base est non encrée.

On a illustré sur les figures 76 à 84 la manière dont s'effectue le remplissage de la super-cellule M conformément à un quatrième exemple de mise en oeuvre du procédé de conversion selon l'invention, lorsque tous les pixels de la fenêtre d'analyse ont des valeurs de nuance identiques et supérieures à 16.

Les zones élémentaires non encrées sont regroupées par pavés de quatre, le nombre de ces pavés étant choisi de manière à obtenir le taux de remplissage recherché pour la super-cellule M.

Les surfaces non encrées ainsi groupées sont alors moins sujettes à se boucher lors de l'impression, du fait de leurs dimensions plus grandes.

En dessous d'une valeur de nuance prédéterminée, soit la valeur de nuance 22 dans l'exemple considéré, le remplissage s'effectue sans regrouper les zones élémentaires non encrées par pavés, car ces dernières ne sont plus isolées mais contiguës à au moins une autre zone élémentaire non encrée de la même cellule de base ou d'une cellule de base adjacente.

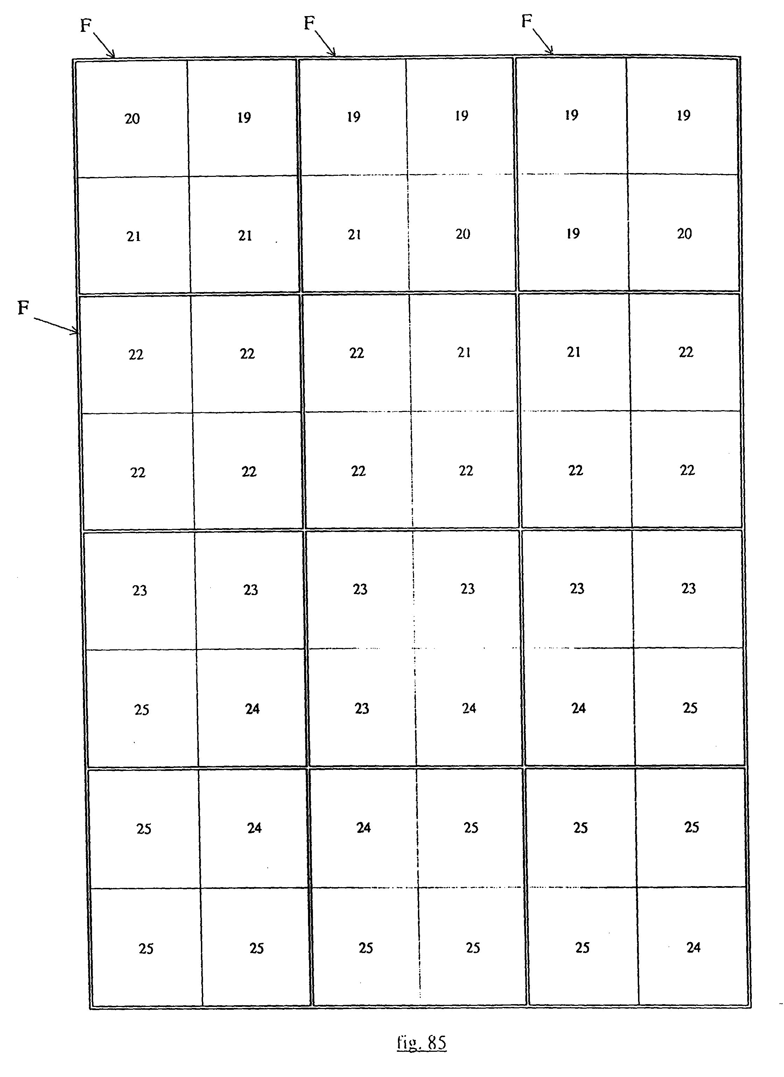

On a représenté sur la figure 85 une image digitalisée comportant plusieurs nuances dans les basses lumières.

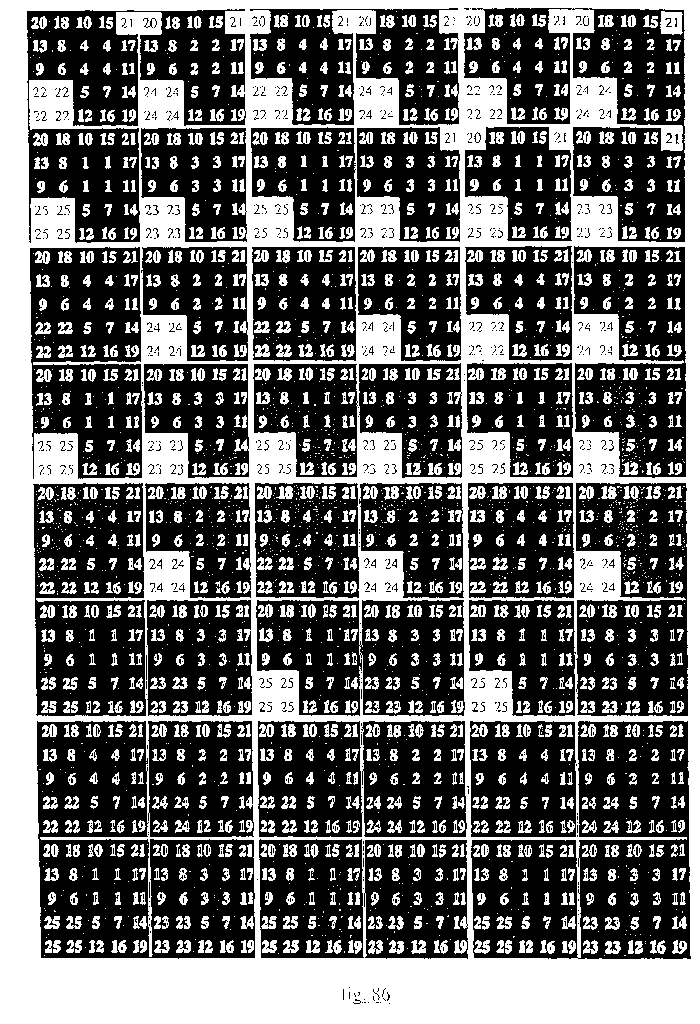

On a représenté sur la figure 86 l'image en demi-ton obtenue par le procédé de conversion mettant en oeuvre la répartition et l'ordre de remplissage des zones élémentaires donnés sur les figures 76 à 84.

On remarquera que la cellule de base située en bas à gauche de la super-cellule a toutes ses zones élémentaires encrées tant que la valeur de nuance du pixel correspondant de la fenêtre d'analyse est supérieure ou égale à 23.

La cellule de base située en bas à gauche de la super-cellule garde toutes ses zones élémentaires encrées tant que la valeur de nuance du pixel correspondant de la fenêtre d'analyse est supérieure ou égale à 24.

Il en est de même des cellules de base situées en haut à gauche et en haut à droite de la super-cellule.

Compte-tenu de la répartition et de l'ordre de remplissage des zones élémentaires de la super-cellule, la fenêtre d'analyse située en bas à gauche sur l'image digitalisée de la figure 85 est convertie en une super-cellule dont les quatre cellules de base sont entièrement encrées.

Il en est de même de la fenêtre d'analyse située en bas à droite sur la figure 85.

Il résulte du procédé de conversion selon cet exemple de mise en oeuvre de l'invention que dans certains cas la valeur des pixels de la fenêtre d'analyse n'est pas convertie en un rapport parfaitement équivalent surface encrée/non encrée, mais en un rapport approché.

Toutefois, il s'avère que dans la pratique les écarts de nuance liés au procédé de conversion selon l'invention sont peu perceptibles.

Bien entendu, l'invention n'est pas limitée aux exemples de réalisation qui viennent d'être donnés, dont les enseignements peuvent naturellement être combinés de diverses manières par l'homme du métier pour aboutir à de nouvelles variantes.

En particulier, on peut modifier le nombre de pixels constituant les fenêtres d'analyse et donc le nombre de cellules de base constituant chaque super-cellule, en fonction du résultat souhaité et/ou de la technique d'impression utilisée.

On peut encore mettre en oeuvre une super-cellule constituée d'un nombre donné de cellules de base lorsqu'il s'agit de restituer une nuance dans les hautes lumières et mettre en oeuvre une super-cellule constituée d'un nombre différent de cellules de base lorsqu'il s'agit de restituer une nuance dans les basses lumières, étant entendu que le procédé de conversion selon l'invention permet d'améliorer, soit la restitution des nuances dans les hautes lumières, soit la restitution des nuances dans les basses lumières, soit les deux.

L'invention trouve application quelle que soit la forme de la cellule de base.

L'invention s'applique bien entendu à la réalisation d'image en demi-ton dans le cadre d'un procédé d'impression en multichromie.

Dans ce cas, le fait de reproduire plus fidèlement les nuances dans les hautes et/ou basses lumières grâce à l'invention permet de réduire la dérive chromatique dans les hautes et/ou basses lumières.

## Revendications

1. Procédé de conversion pour générer une image en demi-ton à partir d'une image digitalisée comportant un ensemble de pixels ayant chacun une valeur de nuance, à chaque pixel de l'image digitalisée étant associée une cellule de base de l'image en demi-ton, subdivisée en autant de zones élémentaires qu'il y a de valeurs de nuances non nulles, caractérisé par le fait qu'il comporte les étapes consistant à :
- analyser l'image digitalisée par fenêtres d'analyse (F) constituées chacune par le regroupement d'un nombre prédéterminé de pixels, et
- au moins dans le cas où la valeur de nuance de l'un au moins des pixels d'une fenêtre d'analyse tombe dans un premier ensemble de valeurs de nuance prédéterminé, effectuer une conversion de la valeur de nuance de chacun des pixels de la fenêtre d'analyse en un rapport choisi surface encrée/non encrée dans chacune des cellules de base correspondant respectivement à ces pixels, ces cellules de base formant ensemble une super-cellule (M), ladite conversion s'effectuant en respectant une répartition des zones élémentaires et un ordre de remplissage prédéterminés en fonction de la valeur de nuance à convertir, cette répartition et cet ordre de remplissage tenant compte de la technique d'impression utilisée pour reproduire l'image en demi-ton sur un support, l'image obtenue présentant deux zones ayant des linéatures différentes sans transition brutale entre elles.

2. Procédé selon la revendication 1, caractérisé par le fait que la conversion en un rapport choisi surface encrée/non encrée dans chacune des cellules de base de la super-cellule s'effectue en respectant une répartition des zones élémentaires et un ordre de remplissage prédéterminés fonction de la valeur de nuance à convertir et ce quelle que soit la valeur de nuance des pixels de la fenêtre d'analyse.

3. Procédé selon la revendication 1, caractérisé par le fait que lorsque toutes les valeurs de nuance des pixels de la fenêtre d'analyse tombent dans un deuxième ensemble de valeurs de nuance prédéterminé, le remplissage des zones élémentaires de toutes les cellules de base de la super-cellule s'effectue de la même manière.

4. Procédé selon l'une quelconque des revendications 1 à 3, caractérisé par le fait que ladite répartition et ledit ordre de remplissage prédéterminés assurent le regroupement des zones élémentaires remplies au sein de la super-cellule lorsque la valeur de nuance de l'un au moins des pixels de la fenêtre d'analyse est inférieure à un seuil donné.

5. Procédé selon la revendication 4, caractérisé par le fait que les zones élémentaires remplies sont regroupées par pavés de n zones élémentaires au sein de chaque cellule de base appartenant à la super-cellule, n étant un multiple du nombre de cellules de base constituant la super-cellule.

6. Procédé selon l'une quelconque des revendications précédentes, caractérisé par le fait que ladite répartition et ledit ordre de remplissage prédéterminés assurent le regroupement des zones élémentaires vides au sein de la super-cellule lorsque la valeur de nuance de l'un au moins des pixels de la fenêtre d'analyse est supérieure à un seuil donné.

7. Procédé selon la revendication 6, caractérisé par le fait que les zones élémentaires vides sont regroupées par pavés de n zones élémentaires au sein de chaque cellule de base appartenant à la super-cellule, n étant un multiple du nombre de cellules de base constituant la super-cellule.

8. Procédé selon la revendication 5 ou 7, caractérisé par le fait que chaque pavé est positionné au centre de la cellule de base dans laquelle il se trouve.

9. Procédé selon la revendication 5 ou 7, caractérisé par le fait que chaque pavé est positionné de manière excentrée dans la cellule de base dans laquelle il se trouve.

10. Procédé de reproduction d'une image digitalisée (1) au moyen d'une technique d'impression telle que l'offset humide, l'offset sec, l'héliogravure, la sérigraphie, la tampographie ou la flexographie, mettant en oeuvre un organe de transfert d'encre (5) sur lequel les nuances des pixels de l'image à reproduire ont été converties en rapports choisis surfaces encrées/non encrées par un procédé de conversion tel que défini dans l'une quelconque des revendications précédentes.

11. Procédé selon la revendication précédente, caractérisé par le fait que la technique d'impression utilisée est l'héliogravure.

12. Procédé selon la revendication 10, caractérisé par le fait que la technique d'impression utilisée est l'offset humide.

13. Procédé selon la revendication 10, caractérisé par le fait que la technique d'impression utilisée est l'offset sec.

14. Procédé selon la revendication 10, caractérisé par le fait que la technique d'impression utilisée est la flexographie.

15. Procédé selon la revendication 10, caractérisé par le fait que la technique d'impression utilisée est la sérigraphie.

16. Procédé selon la revendication 10, caractérisé par le fait que la technique d'impression utilisée est la tampographie.

17. Procédé de reproduction d'une image digitalisée (1) au moyen d'une technique d'impression à jet d'encre, caractérisé par le fait que l'on imprime une image en demi-ton obtenue par un procédé de conversion tel que défini dans l'une quelconque des revendications 1 à 9.

18. Organe de transfert d'encre obtenu par la mise en oeuvre du procédé selon la revendication 1, comprenant une zone destinée à restituer différentes nuances dans les hautes lumières, caractérisé par le fait que ladite zone présente une pluralité de surfaces encrées ayant des dimensions identiques et des surfaces non encrées dont les dimensions sont supérieures ou égales à celles d'une cellule de base.

19. Organe de transfert d'encre obtenu par la mise en oeuvre du procédé selon la revendication 1, comprenant une zone destinée à restituer différentes nuances dans les basses lumières, caractérisé par le fait que ladite zone présente une pluralité de surfaces non encrées ayant des dimensions identiques et des surfaces encrées dont les dimensions sont supérieures ou égales à celles d'une cellule de base.

20. Support imprimé obtenu par la mise en oeuvre du procédé selon la revendication 1, comprenant une zone restituant différentes nuances dans les hautes lumières, caractérisé par le fait que ladite zone présente une pluralité de surfaces encrées ayant des dimensions identiques et des surfaces non encrées dont les dimensions sont supérieures ou égales à celles d'une cellule de base.

21. Support imprimé obtenu par la mise en oeuvre du procédé selon la revendication 1, comprenant une zone restituant différentes nuances dans les basses lumières, caractérisé par le fait que ladite zone présente une pluralité de surfaces non encrées ayant des dimensions identiques et des surfaces encrées dont les dimensions sont supérieures ou égales à celles d'une cellule de base.

22. Support obtenu par la mise en oeuvre du procédé selon la revendication 10.
